# EUROPÄISCHE PATENTSCHRIFT

(11) **EP 1 562 783 B1**
(45) Veröffentlichungstag und Bekanntmachung des Hinweises auf die Patenterteilung: **18.07.2007**
(21) Anmeldenummer: 03793446.0
(22) Anmeldetag: 02.06.2003
(51) Int. Cl.: B60N 2/00, B60N 2/26, B60R 21/01

(54) **KINDERSITZ UND VERFAHREN ZUR KINDERSITZERKENNUNG**
CHILD SEAT AND METHOD FOR RECOGNITION OF A CHILD SEAT
SIEGE POUR ENFANT ET PROCEDE DE DETECTION DE SIEGE POUR ENFANT

(30) Priorität: 24.10.2002 DE 10249465
(43) Veröffentlichungstag der Anmeldung: 17.08.2005
(73) Patentinhaber: ROBERT BOSCH GMBH, 70442 Stuttgart (DE)
(72) Erfinder: MACK, Frank, 70376 Stuttgart (DE); LICH, Thomas, 71409 Schwaikheim (DE)
(86) Internationale Anmeldenummer: PCT/DE2003/001806
(87) Internationale Veröffentlichungsnummer: WO 2004/039623

(56) Entgegenhaltungen:
- EP-A- 0 721 863
- WO-A-01/09964
- WO-A-02/14100
- DE-A- 19 800 638
- DE-A- 19 821 501
- DE-B- 1 082 311

## Beschreibung

### Stand der Technik

Die Erfindung geht aus von einem Kindersitz bzw. einem Verfahren zur Kindersitzerkennung nach der Gattung der unabhängigen Patentansprüche.

Aus der Offenlegungsschrift DE 198 21 501 A1 ist ein Transpondersystem zur Kindersitzerkennung bekannt. Dabei werden Funksignale zur Kindersitzerkennung verwendet, wobei die Kindersitzerkennung im Fahrzeugsitz ein Funksignal an den Transponder im Kindersitz überträgt, der dieses dann verändert zurücküberträgt. Aus dem zurückübertragenen Funksignal wird die Kindersitzidentifikation durchgeführt.

Aus DE 198 00 638 A1 ist es bekannt, dass beifahrerseitige Airbags aufgrund einer Transponderkommunikation zwischen einem Kindersitz und dem Sitz angesteuert werden.

### Vorteile der Erfindung

Der erfindungsgemäße Kindersitz bzw. das erfindungsgemäße Verfahren zur Kindersitzerkennung mit den Merkmalen des jeweiligen unabhängigen Anspruchs haben demgegenüber den Vorteil, dass ein vereinfachtes System zur Kindersitzerkennung vorgeschlagen wird. Dieses zeichnet sich dadurch aus, dass im Kindersitz, vorzugsweise in den Textilien des Kindersitze,
wenigstens ein Funkidentifikationsmodul (Funkidentifikationschip) eingebracht ist, das eine Kennung zur Identifikation aufweist. Der Funkidentifikationschip überträgt laufend oder intermittierend ohne Anfrage ein Funksignal mit der Kennung, anhand derer der Kindersitz erkannt wird. Daher ist der Funkidentifikationschip nur als Sendemodul ausgebildet und weist keine Empfängerstrukturen auf. Andererseits ist im Fahrzeugsitz eine Empfangsstruktur vorhanden, aber nicht notwendigerweise eine Sendestruktur. Damit wird erfindungsgemäß die Funkidentifikation nur durch eine Funkübertragung vom Kindersitz zum Sitz erreicht. Ein weiterer Vorteil ist, dass die einfache unkomplizierte Methodik für alle Kindersitzhersteller gegeben ist, so dass ein vom Fahrzeughersteller vorgegebener Kindersitz nicht notwendigerweise erworben werden muss. Ein weiterer Vorteil ist, dass kein Eingriff in die Bauart des Kindersitzes vorgenommen werden muss, was gegebenenfalls auch eine Nachrüstung mit entsprechenden Textilien ermöglicht.

Es ist möglich, dass im Fahrzeug auch eine herkömmliche, aus dem Stand der Technik bekannte Kindersitzerkennung zusätzlich vorhanden ist.

Durch die in den abhängigen Ansprüchen aufgeführten Maßnahem und Weiterbildungen sind vorteilhafte Verbesserungen der in den unabhängigen Patentansprüchen angegebenen Kindersitz bzw. Verfahren zur Kindersitzerkennung möglich.

Besonders vorteilhaft ist, dass der Funkidentifikationschip in die Textilien selbst eingewebt ist. Das Funkidentifikationschipmodul kann wie bei einem Wirebondverfahren mit den leitenden Gewebebändern verbunden werden. Alternativ ist es möglich, eine flexible Plastikfolie, ähnlich einer flexiblen Leiterplatte mit aufgebrachten Verbindungspads zu benutzen. In beiden Fällen sind der Funkidentifikationschip und der Verbindungsbereich hermetisch gekapselt. Die Energie für den Funkidentifikationschip in den Textilien kann entweder durch einen Energiespeicher bereitgestellt werden, wie eine Batterie oder einen Akkumulator, der wiederaufladbar ist, oder durch einen Thermogenerator. Da der menschliche Körper Energie in Form von Wärme in der Größenordnung von mehreren 10 Watt produziert, liegt es nahe, einen Teil dieser Energie zu nutzen. Miniaturisierte Thermogeneratoren zum Beispiel können aus der Temperaturdifferenz zwischen der Körperoberfläche und der Umgebung elektrische Energie gewinnen. Thermogeneratoren sind einfache elektrische Bauteile, die aus zwei unterschiedlichen Leitern oder Halbleitern bestehen. Sie werden an jeweils einem Ende miteinander verbunden und bilden so ein Thermopaar. Besteht zwischen den beiden Seiten eines Thermopaares eine Temperaturdifferenz, so wird auf Grund des sogenannten Seebeckeffekts eine elektrische Spannung erzeugt und durch einen angeschlossenen Verbraucher, hier das Funkidentifkationschipmodul, kann Strom fließen. Ein Thermogenerator besteht aus einer Vielzahl von Thermopaaren, die alle elektrisch in Serie miteinander verbunden sind und mäanderförmig aneinandergereiht werden, so dass eine möglichst gute Flächenausnutzung gewährleistet wird. Auf diese Weise werden hohe Gesamtspannungen und elektrische Ausgangsleistungen erzielt. Im Gegensatz zu Batterien haben diese Thermogeneratoren sehr günstige Eigenschaften: sie sind waschbar, robust, bestehen aus umweltverträglichen Materialien und haben eine praktisch unbegrenzte Lebensdauer. Bei der Implementierung von Thermogeneratoren in Textilien ist es wichtig, Stellen auszusuchen, an denen möglichst hohe Temperaturdifferenzen zwischen Innen- und Außenseite auftreten. Für eine zuverlässige konstante Energieversorgung müssen die entstehenden Temperaturprofile bei moderaten Umgebungstemperaturen und dünner Kleidung in Betracht gezogen werden. Vergleichsweise geringe Temperaturdifferenzen von vier bis sechs Kelvin werden an den Handgelenken gemessen, die generell eine niedrige Hauttemperatur aufweisen. Im Gegensatz dazu zeigt der Halsbereich sehr hohe Werte. Hier werden durch einen anliegenden Kragen Temperaturdifferenzen von 17 Kelvin erzeugt, was diesen Bereich sehr attraktiv für eine Energiegewinnung macht. Dies ist jedoch für einen Kindersitz zum Teil nicht so attraktiv. Generell zeigen jedoch die Ergebnisse, dass Temperaturdifferenzen von mindestens 5 Kelvin auch bei moderaten Umgebungstemperaturen in der Kleidung erreicht werden.

Um eine möglichst hohe Temperaturdifferenz über den Thermogenerator zu erzielen, muss dieser direkt in den Stoff integriert werden und ein guter thermischer Übergang zur Haut sichergestellt sein. Für seine Ankopplung an die Außenwelt werden jeweils dünne Kupferplättchen an seiner kalten und heißen Seite aufgebracht. Kupfer ist deshalb gut geeignet, weil es eine sehr hohe thermische Leitfähigkeit besitzt. Um ein Abfärben des Kupfers auf der Haut zu verhindern, wird es noch galvanisch mit einer dünnen Schicht Gold oder Silber überzogen. Der Thermogeneratorchip ist wasserfest mit Polyurethan verkapselt. Die elektrischen Kontakte werden mit versilberten Kupferdrähten verbunden, die mit Polyesterlack isoliert und in den Stoff eingewebt sind. Ein Pufferkondensator, der die erzeugte Energie speichert, kann direkt am Thermogenerator oder einem anderen Ort in der Kleidung integriert werden. Bei einer Temperaturdifferenz von 5 Kelvin über den Thermogeneratorchip aus Silizium wird eine elektrische Ausgangsleistung von 1,0 µWatt pro Quadratzentimeter unter Last und eine Leerlaufspannung von 10 Volt pro Quadratzentimeter erzeugt. Diese Werte reichen schon aus, um eine Armbanduhr mit Energie zu versorgen. Höhere Leistungen können durch höhere Temperaturdifferenzen und eine größere aktive Fläche erzielt werden. So ist eine Ausgangsleistung von 10 bis 300µ Watt ausreichend, um medizinische Sensoren mit Energie zu versorgen und die Daten drahtlos zu einem Aufzeichnungsgerät zu übertragen.

Die erfindungsgemäße Kindersitzerkennung kann vorteilhafterweise mit anderen Methoden zur Kindersitzerkennung kombiniert werden, um eine Plausibilität oder eine höhere Sicherheit der Kindersitzerkennung zu erreichen. Sie kann beispielsweise mit einer Kindersitzerkennung verbunden werden, die den Kindersitz über das Sitzdruckprofil bestimmt, beispielsweise mit einer Sensormatte oder über ein optisches Identifikationssystem zur Kindersitzerkennung verfügt, also einen Videosensor.

### Zeichnung

Ausführungsbeispiele der Erfindung sind in der Zeichnung dargestellt und werden in der nachfolgenden Beschreibung näher erläutert.

Es zeigen
- Figur 1: ein erstes Blockschaltbild des erfindungsgemäßen Kindersitzes
- Figur 2: eine schematische Darstellung der erfindungsgemäßen Vorrichtung und
- Figur 3: ein Flussdiagramm des erfindungsgemäßen Verfahrens zur Kindersitzerkennung.

### Beschreibung

Um einen Kindersitz auf der Beifahrerseite zu identifizieren gibt es neben der direkten Massenbestimmung die Möglichkeit, den Kindersitz mit einem Transpondersystem auszustatten. Dabei ist die sogenannte OC-(Occupant Classification)Matte mit einer Sende- und Empfangsantenne ausgerüstet. Der Kindersitz enthält dabei mindestens eine oder mehrere Transponderspulen, die auf das von der OC-Matte gesendete Signal reagieren und ein entsprechendes Signal zum Teil in codierter Form zurücksenden. Über die Empfangsantenne wird nun ausgewertet, ob es sich um einen Kindersitz auf dem Sitz handelt. Im Weiteren wird anhand einer Identifikation ermittelt, um welchen Kindersitz es sich handelt und wie dieser positioniert ist.

Erfindungsgemäß wird nun eine andere Methode zur kontaktlosen bzw. berührungslosen Erfassung bzw. Identifikation von Kindersitzen vorgestellt. Dabei soll ein Verfahren und ein Kindersitz angegeben werden, die sich ohne große Änderungen am Kindersitz selbst realisieren lassen. Dadurch wird es jedem Kindersitzhersteller ermöglicht, die Methodik der Transpondererkennung einzusetzen, ohne dass es Wettbewerbsverzerrungen gibt.

Erfindungsgemäß wird nun ein Funkidentifikationschip vorzugsweise in die Textilien des Kindersitzes eingebracht und sendet dann eine Kennung für diesen Kindersitz aus. Der Funkidentifikationschip weist keine Empfangseinrichtung auf und wird mit einer eigenen Energieversorgung, entweder einem Thermogenerator oder einem Energiespeicher, wie einer Batterie, versorgt. Dabei kann vorgesehen sein, dass der Energiespeicher aufladbar oder auswechselbar ist. Es ist möglich, dass in einem Kindersitz mehr als ein Funkidentifikationschip verwendet wird. Vorzugsweise ist der Funkidentifikationschip in die Textilien eingewebt. Der Funkidentifikationschip kann das Funksignal permanent oder intermittierend abgeben. Das erfindungsgemäße Verfahren kann zusätzlich zu anderen Methoden der Kindersitzerkennung wie der Auswertung eines Sitzdruckprofils oder einer optischen Identifikation eingesetzt werden. Dies ermöglicht eine Plausibilisierung dieser Ergebnisse.

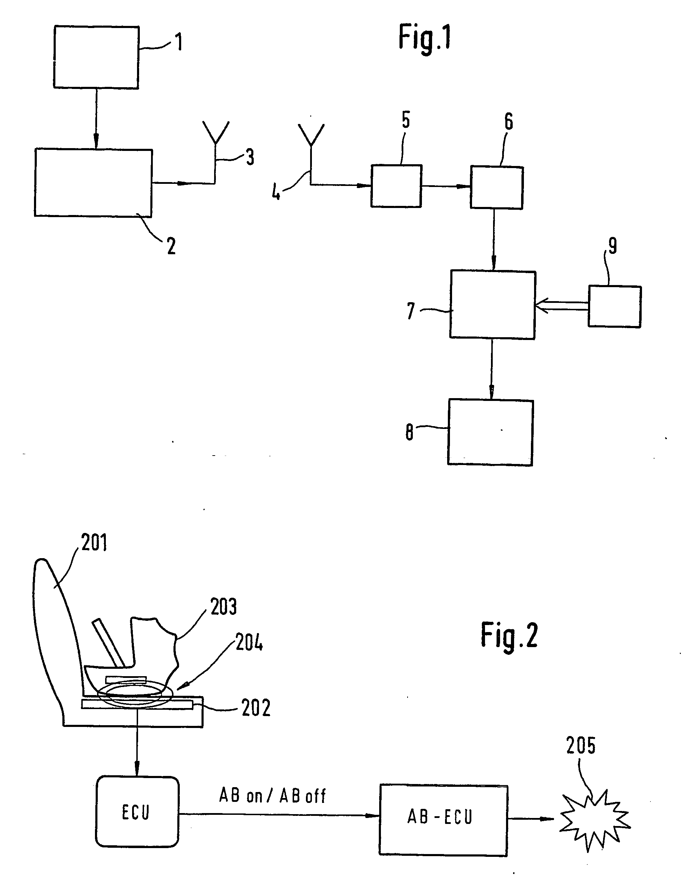

Figur 1 zeigt als Blockschaltbild die erfindungsgemäße Vorrichtung. Im Kindersitz ist ein Energiespeicher 1 mit einem Funkidentifikationschip 2 verbunden. Über einen Ausgang ist der Funkidentifikationschip 2 mit einer Antenne 3 verbunden. Es ist möglich, dass alle drei Komponenten auf einem Element angeordnet sind. Sie können auch getrennt in den Textilien des Kindersitzes untergebracht sein. Im Sitz im Fahrzeug ist eine Antenne 1 an ein Empfangsmodul 5 angeschlossen, das mit einem Steuergerät 6 verbunden ist. Das Steuergerät 6 ist an ein Airbagsteuergerät 7 angeschlossen, an das auch eine Sensorik 9 angeschlossen ist. Das Airbagsteuergerät 7 ist an Rückhaltemittel 8 angeschlossen.

Der Funkidentifikationschip 2 verwendet für seinen Betrieb Energie aus dem Energiespeicher 1, der ein Thermogenerator oder eine Batterie ist und versendet damit laufend Kennungssignale über Funk mittels der Antenne 3. Solche eine Kennung wird durch die Antenne 4 empfangen und an das Empfangsmodul 5 übertragen, das eine Signalaufbereitung über Verstärkung, Mischung und Filterung durchführt. Als digitales Signal überträgt dann das Empfangsmodul 5 die Kennung an das Steuergerät bzw. den Prozessor 6, der durch Vergleich mit abgespeicherten Kennungen die empfangene Kennung vergleicht, um festzustellen, ob es sich um eine Kennung handelt, die von einem Kindersitz ausgestrahlt wurde. Wurde ein Kindersitz erkannt, dann überträgt das Steuergerät 6 an das Airbagsteuergerät 7 ein Signal, dass auf dem jeweiligen Sitz ein Kindersitz sich befindet. Das Airbagsteuergerät 7 steuert in diesem Fall die betreffenden Rückhaltemittel nicht an. Ansonsten würde das Airbagsteuergerät 7 bei einem Auslösefall, der durch die Sensorik 9, beispielsweise Beschleunigungssensoren, erkannt wird, die Rückhaltemittel 8 auch für diesen Sitz, auf dem sich der Kindersitz befindet, ansteuern.

Das Funksignal, das von der Antenne 3 abgestrahlt wird, ist dabei so beschaffen, dass es nur eine geringe Reichweite aufweist, so dass andere Empfänger im Fahrzeug, insbesondere für die anderen Sitze, dieses Funksignal nicht empfangen können. Dies kann beispielsweise dadurch erreicht werden, dass eine sehr hohe Sendefrequenz verwendet wird oder eine schwache Sendeleistung. Insbesondere die schwache Sendeleistung ist von Vorteil, da sie den Energiespeicher 1 wenig belastet und auch im Hinblick auf eine elektromagnetische Verträglichkeit unkritisch ist. Auch wird die Akzeptanz eines solchen Funkidentifikationschips steigen, wenn die Belastung der Umwelt und insbesondere eines Kleinkindes, das sich auf dem Kindersitz befindet, durch die ausgestrahlten Funksignale vernachlässigbar ist.

Figur 2 zeigt in einer schematischen Darstellung die erfindungsgemäße Vorrichtung. Auf einem Fahrzeugsitz 201, der eine Empfangseinheit 202 besitzt, ist ein Kindersitz mit der erfindungsgemäßen Sendeeinheit im Stoff integriert 203 angeordnet. Über die berührungslose Messung 204 erkennt der Fahrzeugsitz über die Empfangseinheit 202, dass sich ein Kindersitz auf dem Sitz 201 befindet. Dies wird in dem Steuergerät ECU erkannt. Das Steuergerät ECU überträgt dann ein entsprechendes Signal an ein Airbagsteuergerät AB-ECU, ob der betreffende Airbag aus- oder eingeschaltet werden soll. In Abhängigkeit davon steuert das Airbagsteuergerät AB-ECU die Rückhaltemittel 205 an.

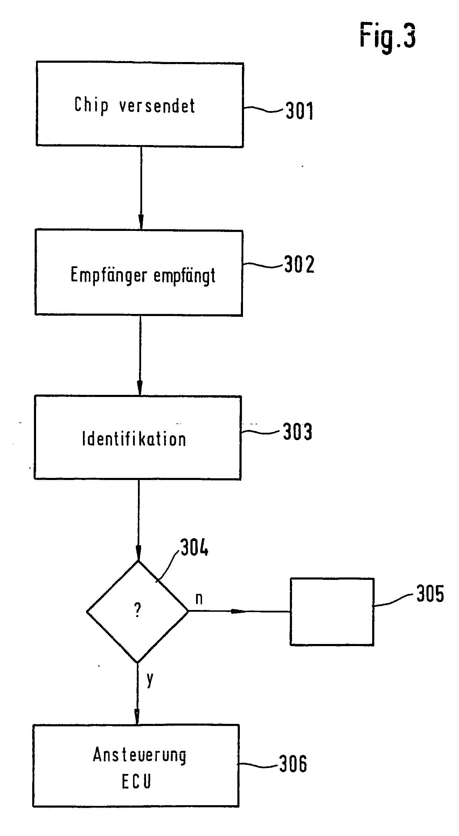

Figur 3 zeigt in einem Flussdiagramm den Ablauf des erfindungsgemäßen Verfahrens zur Kindersitzerkennung. In Verfahrensschritt 301 versendet der Funkidentifikationschip 2 über die Antenne 3 die Kennung mittels eines Funksignals. In Verfahrensschritt 302 empfängt der Empfänger 5 mit der Antenne 4 dieses Signal und überträgt es an das Steuergerät 6. In Verfahrensschritt 303 bestimmt das Steuergerät 6 aus der Kennung, ob es sich um einen Kindersitz handelt. Ist das in Verfahrensschritt 304 als solcher erkannt worden, wird das Airbagsteuergerät in Verfahrensschritt 306 entsprechend angesteuert, dass sich auf dem jeweiligen Sitz ein Kindersitz befindet.

Wurde jedoch in Verfahrensschritt 304 erkannt, dass es sich nicht um einen Kindersitz handelt, dann wird in Verfahrensschritt 305 das Verfahren beendet.

Im Weiteren bietet dieses System die Möglichkeit, eine redundante Information neben massebestimmenden Sensoren oder Druckfoliensensoren zu liefern. Das Empfangssystem auf der Fahrzeugseite kann ebenso im Fahrzeugsitz bzw. der Rücklehne bzw. im Sitzbezug direkt integriert werden und vereinfacht so die Produktion im Serieneinsatz, da die Integration von Foliendrucksensoren sehr aufwändig ist und große Toleranzen beim Verbau mit sich bringen kann. Eine H-Punkt-Erhöhung ist ebenfalls nicht gegeben, da sich der Stoff in seiner Eigenschaft nicht ändert. Als eine weitere mögliche Anwendung ist die Integration dieser Elektronik in verschiedene Sitzunterlagen gegeben. Dies führt bei Druckfolien zu einer Verwaschung des Eingabesignals. Bei entsprechender Identifikation kann dem Steuergerät dies mitgeteilt werden und entsprechende Modifikationen Können vorgenommen werden. Dies würde Fehlklassifizierungen verhindern und gegebenenfalls ein Abschalten des Airbags bei Personen auf Grund von Fehlklassifizierungen vermeiden.

Vorzugsweise arbeitet die erfindungsgemäße Anordnung im ISM-Frequenzbereich oder einem anderen Frequenzbereich, der für solche Nahbereichsanwendungen geeignet ist.

## Patentansprüche

1. Kindersitz (201) mit einer funkbasierten Identifikation, **dadurch gekennzeichnet, dass** in dem Kindersitz (201) wenigstens ein Funkidentifikationschip (2) eingebracht ist, der nur als Sendemodul ausgebildet ist, wobei der wenigstens eine Funkidentifikationschip (2) eine jeweilige Kennung zur Versendung mittels des Funksignals aufweist.

2. Kindersitz nach Anspruch 1, **dadurch gekennzeichnet, dass** der wenigstens eine Funkidentifikationschip (2) in für den Kindersitz (201) verwendete Textilien eingewebt ist.

3. Verfahren zur Kindersitzerkennung, wobei der Kindersitz mittels eines Funksignals erkannt wird, **dadurch gekennzeichnet, dass** der Kindersitz (201) mittels eines vom Kindersitz (201) selbsttätig ausgesandten Funksignals erkannt wird, wobei vom Kindersitz (201) nur gesendet wird.

4. Verfahren nach Anspruch 3, **dadurch gekennzeichnet, dass** das Funksignal permanent abgegeben wird.

5. Verfahren nach Anspruch 3 oder 4, **dadurch gekennzeichnet, dass** zur Kindersitzerkennung zusätzlich noch ein Sitzdruckprofil verwendet wird.

6. Verfahren nach Anspruch 3 oder 4, **dadurch gekennzeichnet, dass** zur Kindersitzerkennung zusätzlich noch ein optisches Identifikationssystem verwendet wird.

## Claims

1. Child seat (201) with radio-based identification, **characterized in that** the child seat (201) is fitted with at least one radio identification chip (2) which is designed only as a transmission module, with the at least one radio identification chip (2) having a respective identifier for transmission by means of the radio signal.

2. Child seat according to Claim 1, **characterized in that** the at least one radio identification chip (2) is woven into textiles used for the child seat (201).

3. Method for detecting a child seat, with the child seat being detected by means of a radio signal, **characterized in that** the child seat (201) is detected by means of a radio signal which is automatically emitted by the child seat (201), with the child seat (201) performing only transmission operations.

4. Method according to Claim 3, **characterized in that** the radio signal is output permanently.

5. Method according to Claim 3 or 4, **characterized in that** a seat pressure profile is also additionally used for detecting a child seat.

6. Method according to Claim 3 or 4, **characterized in that** a visual identification system is also additionally used for detecting a child seat.

## Revendications

1. Siège enfant (201) comportant une identification par radio,
**caractérisé en ce qu'**
on intègre dans le siège enfant (201) au moins une puce d'identification radio (2) uniquement conçue en tant que module d'émission, l'au moins une puce d'identification radio (2) présentant une identification respective à envoyer au moyen d'un signal radio.

2. Siège enfant selon la revendication 1,
**caractérisé en ce que**
l'au moins une puce d'identification radio (2) est cousue dans des textiles utilisés pour le siège enfant (201).

3. Procédé de détection d'un siège enfant, le siège enfant étant détecté au moyen d'un signal radio,
**caractérisé en ce que**
on détecte le siège enfant (201) au moyen d'un signal radio envoyé automatiquement par le siège enfant (201), le siège enfant (201) pouvant uniquement émettre.

4. Procédé selon la revendication 3,
**caractérisé en ce que**
le signal radio est délivré en permanence.

5. Procédé selon la revendication 3 ou la revendication 4,
**caractérisé en ce qu'**
on utilise en plus un profil de pression du siège pour détecter le siège enfant.

6. Procédé selon la revendication 3 ou la revendication 4,
**caractérisé en ce qu'**
on utilise en plus un système d'identification optique pour détecter le siège enfant.
